# EUROPÄISCHE PATENTSCHRIFT

(11) **EP 3 827 483 B1**
(45) Veröffentlichungstag und Bekanntmachung des Hinweises auf die Patenterteilung: **07.06.2023**
(21) Anmeldenummer: 19745105.7
(22) Anmeldetag: 23.07.2019
(51) Int. Cl.: H01R 31/02, H01R 25/00, H01R 13/64, H01R 13/66, H01R 13/70, H02G 3/08, H02G 3/16

(54) **VERTEILERVORRICHTUNG UND SYSTEM ZUM FÜHREN UND VERTEILEN VON ELEKTRISCHER ENERGIE UND ZUM BEREITSTELLEN EINER DATENLEITENDEN KOMMUNIKATIONSVERBINDUNG**
DISTRIBUTING DEVICE AND SYSTEM FOR CONDUCTING AND DISTRIBUTING ELECTRICAL ENERGY AND FOR PROVIDING A DATA-CONDUCTING COMMUNICATION CONNECTION
DISPOSITIF DE DISTRIBUTION ET SYSTÈME D'ACHEMINEMENT ET DE DISTRIBUTION DE L'ÉNERGIE ÉLECTRIQUE ET DE FOURNITURE D'UNE CONNEXION DE COMMUNICATION COMMUNIQUANT DES DONNÉES

(30) Priorität: 24.07.2018 DE 102018117906
(43) Veröffentlichungstag der Anmeldung: 02.06.2021
(73) Patentinhaber: Goodville GmbH, 22605 Hamburg (DE)
(72) Erfinder: MUEHLHANS, Christoph, 22605 Hamburg (DE)
(74) Vertreter: RGTH
(86) Internationale Anmeldenummer: PCT/EP2019/069847
(87) Internationale Veröffentlichungsnummer: WO 2020/020914

(56) Entgegenhaltungen:
- DE-A1- 3 330 627
- DE-A1- 3 332 166
- DE-A1-102015 110 644

## Beschreibung

Die Erfindung betrifft eine Verteilervorrichtung zum elektrischen Verbinden von mindestens zwei elektrischen Leitungen von mindestens zwei Systemkabeln, aufweisend ein Grundelement mit mindestens zwei Anschlussbereichen zum Aufnehmen und Führen von internen Leitungen entlang eines Bodens und zum Aufnehmen von Anschlussbuchsen oberhalb der internen Leitungen, aufweisend jeweils eine Öffnung in einer Wand des Grundelementes im Anschlussbereich zum Ausbilden einer Steckverbindung mit elektrischen Leitungen der Systemkabel. Des Weiteren betrifft die Erfindung ein System zum Führen und Verteilen von elektrischer Energie und zum Bereitstellen einer datenleitenden Kommunikationsverbindung.

Im Bereich von Elektroinstallationen werden üblicherweise Verbindungskästen eingesetzt. Derartige Verbindungskästen dienen zum endseitigen Aufnehmen von elektrischen Leitungen, welche beispielsweise über Klemmen im Verbindungskasten miteinander verbunden werden. Die Verbindung der elektrischen Leitungen erfolgt üblicherweise durch Fachpersonal, welches die entsprechenden Stromlaufpläne der jeweiligen Anlage oder Gebäudes umsetzt.

### Stand der Technik

Zum Beschleunigen einer Elektroinstallation sind bereits Verbindungskästen bekannt, welche integrierte Klemmen oder integrierte Verbindungsmöglichkeiten für elektrische Leitungen aufweisen. Derartige Verbindungskästen nutzen hierzu üblicherweise Abzweigklemmen mit Schneidmitteln, welche eine Isolation von elektrischen Leitungen durchdringen und einen elektrischen Kontakt herstellen können. Beispielsweise ist aus der DE 33 32 166 A1 eine entsprechende Abzweigklemme bekannt. Diese Schneidmittel können üblicherweise nur einmalig effizient eingesetzt werden, da ein wiederholtes Einsetzen der Schneidmittel in die vorher verwendete Position der elektrischen Leitung eine reduzierte Flächenpressung und somit einen hohen elektrischen Übergangswiderstand zu den elektrischen Leitungen aufweist. Des Weiteren kann durch wiederholtes Einsetzen der Schneidmittel die strukturelle Integrität der elektrischen Leitungen beeinträchtigt werden.

Es sind weitere Verbindungskästen bekannt, welche elektrische Leitungen durch Schraubverbindungen bzw. Klemmverbindungen elektrisch und mechanisch koppeln können. Hierzu gehört beispielsweise die DE 33 30 627 A1, bei der über einen Klemmkörper elektrische Leiter gegen eine Kastenwand eingeklemmt werden können.

Die DE 10 2015 110 644 A1 beschreibt eine Vorrichtung gemäß dem Oberbegriff von Anspruch 1 zur trennbaren elektrischen Verbindung von mindestens einem Eingangsstromleiter mit mindestens einem korrespondierenden Ausgangsstromleiter. Hierfür ist ein Verbindungselement mit einer elektrisch leitenden Kontaktzunge vorgesehen.

Aus den Druckschriften EP 0 142 404 B1 und DE 22 46 964 B2 sind Netztrennschalter bekannt. Aus der EP 0 310 965 A2 ist ein Schaltnetzteil mit einer Verbindungseinrichtung bekannt, die es erlaubt, eine kundenspezifische Belegung einer Steckerleiste an die gerätespezifische geometrische Anordnung von Potential-und Steuerleitungen anzupassen.

### Darstellung der Erfindung: Aufgabe, Lösung, Vorteile

Der Erfindung liegt die Aufgabe zugrunde, eine Verteilervorrichtung und ein System vorzuschlagen, die eine einfache Montage und Bedienbarkeit ermöglichen. Diese Aufgabe wird durch die im Anspruch 1 und Anspruch 14 angegebenen Merkmale gelöst. Weitere vorteilhafte Ausgestaltungen der Erfindung sind in den Unteransprüchen beschrieben.

Nach einem Aspekt der Erfindung wird eine Verteilervorrichtung zum elektrischen Verbinden von mindestens einer elektrischen Leitung eines ersten Systemkabels mit einer elektrischen Leitung eines zweiten Systemkabels bereitgestellt. Die Verteilervorrichtung weist ein Grundelement mit mindestens zwei Anschlussbereichen zum Aufnehmen und Führen von internen Leitungen entlang eines Bodens des Grundelements und zum Aufnehmen von Anschlussbuchsen oberhalb der internen Leitungen auf. Des Weiteren weist die Verteilervorrichtung jeweils eine Öffnung in einer Wand des Grundelementes im Anschlussbereich zum Ausbilden einer Steckverbindung mit jeweils einem der Systemkabel auf, wobei in die Anschlussbuchsen Schaltbrücken einsetzbar sind und wobei die Schaltbrücken dazu ausgestaltet sind, in einem aktivierten Zustand die internen Leitungen elektrisch mit den elektrischen Leitungen des in die Öffnung hineingesteckten Systemkabels zu verbinden, sowie in einem deaktivierten Zustand die elektrische Verbindung zu trennen. Die Verteilervorrichtung dient somit auch zur mechanischen Kopplung mit den Systemkabeln.

Die Verteilervorrichtung kann beispielsweise in Form einer Unterputzmontage (UP-Montage) oder einer Aufputzmontage in einem Einbauzustand anbringbar sein. Hierfür kann das Grundelement eine oder mehrere Bohrungen aufweisen, die zum Herstellen einer Schraubverbindung mit einer Wand, dem Boden einer UP-Einbau-oder -Einputz-Dose und zur Befestigung einer Dosen-Abdeckung bzw. Gerätedose (Steckdose, Schalter) dienen. Neben der Verteilervorrichtung kann ein System bzw. eine Baureihe mit passenden Montageträgern, Leerrohren, elektrischen Leitern mit Steckern und dergleichen bereitgestellt werden.

Die Verteilervorrichtung kann als Ersatz für herkömmliche Verteilerklemmen und Verbinderklemmen für ein oder mehrere Systemkabel dienen und ist für eine Starkstrominstallation, beispielsweise bis 16A, einsetzbar. Jedes Systemkabel kann mindestens eine Ader bzw. elektrische Leitung aufweisen, wobei das Ende jedes Systemkabels formschlüssig in die mindestens eine wandseitige Öffnung einsetzbar ist. Hierfür weist zumindest das Ende des Systemkabels, bevorzugterweise das gesamte Systemkabel, einen mit der Öffnung korrespondierenden Querschnitt auf.

Das Grundelement kann als ein bereichsweise geöffnetes oder geschlossenes Gehäuse ausgestaltet sein. Eine Grundform des Grundelementes kann beispielsweise eckig sein. In einer vorteilhaften Ausgestaltung kann die Grundform des Grundelementes rund oder achteckig sein.

Die internen Leitungen erstrecken sich zumindest zwischen den mindestens zwei Anschlussbereichen. Nach dem Einsetzen der Systemkabel und dem Herstellen der elektrischen Verbindungen zwischen den internen Leitungen und den elektrischen Leitungen mittels der Schaltbrücken, wird somit die elektrische Verbindung zwischen den elektrischen Leitungen der Systemkabel hergestellt. Die internen Leitungen dienen zusammen mit den Schaltbrücken als elektrische Verbindungsmittel der einzelnen elektrischen Leitungen der Systemkabel. Die internen Leitungen können isoliert oder nicht isoliert ausgeführt sein. Beispielsweise können die internen Leitungen Stromschienen sein, die in entsprechenden Ausnehmungen an einem Boden und/oder Wänden des Grundelementes verlegt sind. Durch die Ausnehmungen können die Stromschienen gegeneinander beabstandet und isoliert werden.

Eine Anschlussbuchse kann im Anschlussbereich in das Grundelement formschlüssig eingesetzt werden und kann Ausnehmungen zum Aufnehmen einer Schaltbrücke aufweisen. Vorzugsweise können die Ausnehmungen von einem oberen Ende der Anschlussbuchse zu einem unteren Ende der Anschlussbuchse hindurchreichen und sind hierdurch in einem im Wesentlichen rechten Winkel zu dem in die Öffnung eingesetzten Systemkabel bzw. dessen elektrischen Leitungen angeordnet. An dem unteren Ende der Anschlussbuchse sind die internen Leitungen angeordnet. Die Anschlussbuchse kann in einer der Öffnung zugewandten Seite einen Aufnahmeabschnitt zum Aufnehmen des Systemkabels mit dessen elektrischen Leitungen aufweisen. Durch ein vollständiges Einsetzen des Systemkabels in die Öffnung und einem Aktivieren einer Schaltbrücke durch das obere Ende der Anschlussbuchse kann das in die Öffnung eingesetzte Systemkabel und/oder die elektrischen Leitungen endseitig formschlüssig oder reibschlüssig arretiert werden. Unter einem vollständigen Einsetzen des Systemkabels in die Öffnung ist gemäß der Erfindung zu verstehen, dass das Systemkabel durch die Öffnung hindurch und bis zu einem Anschlag in die Anschlussbuchse hineingesteckt ist.

Die Schaltbrücke weist einen oder mehrere elektrisch leitende Abschnitte auf, welche einen elektrischen Kontakt zwischen den elektrischen Leitungen und den internen Leitungen herstellen, wenn die Schaltbrücke aktiviert ist. Hierdurch kann die Schaltbrücke durch die leitenden Abschnitte die seitwärts in die Anschlussbuchse eingesetzten elektrischen Leitungen mit den unterhalb der Anschlussbuchse angeordneten internen Leitungen elektrisch überbrücken. Die elektrische Überbrückung der elektrischen Leitungen und der internen Leitungen kann durch eine Druckbeaufschlagung der Schaltbrücke und/oder durch ein bereichsweises Einschneiden in die entsprechenden elektrischen Leitungen umgesetzt werden.

Zum Aktivieren der Schaltbrücke wird diese mit deren elektrisch leitenden Abschnitten vorzugsweise von oben in die Anschlussbuchse hineingeschoben bzw. gedrückt. Dabei werden die elektrisch leitenden Abschnitte, in vertikale Durchführungen der Anschlussbuchse hineingeführt, wobei die Ummantelung des in die Anschlussbuchse eingesetzten Systemkabels durchstoßen und/oder eingeschnitten wird. Die Schaltbrücke kann auch in einem deaktivierten Zustand oder einem Montagezustand ohne eine Arretierung des eingesetzten Systemkabels an der Anschlussbuchse angeordnet werden.

Die jeweiligen Anschlussbereiche und Anschlussbuchsen können beispielsweise umfangseitig in dem Grundelement ortsfest eingesetzt bzw. angeordnet werden. Hierdurch können mehrere Anschlussmöglichkeiten für elektrische Leitungen realisiert werden, die aus unterschiedlichen Richtungen mit der Verteilervorrichtung verbindbar sind.

Die elektrische Verbindung zwischen den internen Leitungen und den Adern bzw. den elektrischen Leitungen kann durch Herausziehen der Kontaktbrücke bzw. Schaltbrücke unterbrochen werden. Die elektrische Verbindung kann durch Hineinstecken der Schaltbrücke in die Anschlussbuchse wiederholt geschlossen werden. Somit kann der Kontakt mehrfach hergestellt und unterbrochen werden, ohne dass das Systemkabel aus der Verteilervorrichtung bzw. der Steckverbindung entfernt werden muss. Beispielsweise kann zum Anschluss weiterer Systemkabel an der Verteilervorrichtung somit in sehr einfacherweise die elektrische Verbindung mit dem bereits angeschlossenen Systemkabel bzw. dessen elektrischen Leitern unterbrochen werden und die Verteilervorrichtung dadurch spannungsfrei geschaltet werden.

Bei der Verwendung von wassergeschützten Bauteilen, wie beispielsweise im Schiffbau oder in Bereichen mit hoher Feuchtigkeit, kann die Verteilervorrichtung ebenfalls eingesetzt werden. Hierfür kann die Steckverbindung beispielsweise gemäß einer IP 68 Norm abdichtbar ausgestaltet sein. Bevorzugterweise kann das Grundelement ebenfalls gegen Eindringen von Feuchtigkeit abdichtbar sein.

Nach einer Ausführungsform ist die mindestens eine Schaltbrücke manuell oder elektrisch aktivierbar und/oder deaktivierbar. Hierdurch kann die mindestens eine Schaltbrücke händisch in die mindestens eine Anschlussbuchse hineinschiebbar und aus dieser herausziehbar sein. Des Weiteren kann das Aktivieren und Deaktivieren der Schaltbrücken maschinell durchgeführt werden. Dies kann beispielsweise durch einen extern steuerbaren oder einen autonomen Roboter erfolgen.

Ein Systemkabel kann nur in einer vorgegebenen Ausrichtung in die Verteilervorrichtung eingesetzt werden, wenn mindestens eine durch eine Öffnung und dem Systemkabel ausgebildete Steckverbindung polarisiert ausgeführt ist. Das Systemkabel kann derart geformt sein, dass es nur in der verlangten Ausrichtung in die Verteilervorrichtung bzw. den Verbinder passt. Die entsprechende Polarisierung bzw. Codierung des Systemkabels kann durch eine Form des Systemkabels und eine korrespondierende Form der Öffnung gegeben sein. Beispielsweise kann das Systemkabel eine eckige Form aufweisen und/oder Ausrichtungspins zum Führen des Systemkabels innerhalb der Öffnung aufweisen. Das Systemkabel kann vorzugsweise mit einem eckigen Querschnitt, wie beispielsweise sechseckig, ausgeformt sein. Besonders bevorzugterweise weisen die Systemkabel einen pfeilförmigen und/oder sechseckigen Querschnitt auf.

Nach einer weiteren Ausgestaltung weist das Grundelement mindestens eine mit den internen Leitungen verbindbare Platine auf. Gemäß einer weiteren Ausführungsform weist mindestens eine Platine eine IP-Adresse auf und ist dazu ausgestaltet, eine Powerline-Kommunikationsverbindung bereitzustellen. Hierdurch kann jede Verteilervorrichtung eine Platine mit einem PowerLine-Chip und einer eigenen IP-Adresse erlangen. Über die PowerLine-Kommunikationsverbindung und die IP-Adresse ist jedes Bauteil bzw. jede Verteilervorrichtung im System und in der Position innerhalb einer Leitung erfasst. In einer Kommunikationszentrale bzw. PowerLine-Zentrale, welche über die elektrischen Leitungen mit der Verteilervorrichtung datenleitend verbindbar ist, kann ein Schaltplan der Elektroinstallation ausgelesen und Änderungen bzw. verschiedene Systemzustände registriert werden.

Nach einer weiteren Ausführungsform ist die mindestens eine Platine über die Powerline-Kommunikationsverbindung fernsteuerbar. Mit einem ersten Einschalten der Anlage bzw. der Verteilervorrichtungen können alle verwendeten Bauteile mit jeweils individuellen IP-Adressen über einen PowerLine-Adapter bzw. die Kommunikationszentrale eingelesen werden. Es ergibt sich automatisch ein Schaltplan, mit einer räumlichen Zuordnung, beispielsweise anhand spezieller Raumsensoren. Hierdurch kann auch ein Grundriss mit allen Bauteilen erstellt werden. Über die in der Verteilervorrichtung eingesetzte und individuell über die IP-Adresse ansteuerbare Platine können beispielsweise Schalter, Leuchten und Steckdosen ferngesteuert aktiviert oder deaktiviert werden.

Der Einsatzbereich und die Automatisierungsmöglichkeiten der Verteilervorrichtung können erweitert werden, wenn die Verbindungsanordnung mindestens einen von der Platine auslesbaren Sensor aufweist. Bevorzugterweise ist der mindestens eine Sensor ein Temperatursensor, ein Spannungssensor oder ein Stromsensor. Beispielsweise kann somit im Falle einer Überhitzung über die Kommunikationsverbindung eine Warnung generiert und der entsprechende Strang der Elektroinstallation mindestens an der Sicherung, in einer komplexeren Anlage am nächstgelegenen Verzweigungspunkt, ausgeschaltet werden.

Durch den Einsatz von Sensoren in der Verteilervorrichtung können umfangreiche Diagnose- und Auswertungsmöglichkeiten umgesetzt werden. Geräte, Kabel oder Verteiler mit Kurz- oder Masseschluss können partiell abgeschaltet werden, wenn der mindestens eine Sensor Messwerte ermittelt, die außerhalb einer definierten Norm sind. Hierdurch kann beispielsweise ein Schutz vor Überhitzung und Kabelbrand durch einen Wärmesensor in jeder Verteilervorrichtung ermöglicht werden.

Die Verteilervorrichtung kann über die Kommunikationsverbindung gesteuert oder geregelt werden, wenn die mindestens eine Schaltbrücke und/oder mindestens ein in dem Grundelement angeordnetes Relais von der mindestens einen Platine gesteuert aktivierbar und/oder deaktiverbar sind.

Es kann somit vorgesehen sein, dass die Verteilervorrichtungen ein Relais zum Schalten eines oder mehrerer Ausgänge aufweisen. Das Relais kann beispielsweise in Form eines Schließers ausgeführt sein. Ein Relais oder eine entsprechende Spule kann zum Betätigen eines internen elektrischen Schalters zusätzlich zu den Anschlussbuchsen und der Platine in dem Grundelement positioniert werden. Die Ansteuerung der Spule oder des Relais kann über die IP-Adresse der Platine erfolgen. Hierdurch kann beispielsweise eine der Verteilervorrichtung nachgeordnete Steckdose, Leuchte oder ein Schalter ein- und ausgeschaltet werden. Des Weiteren ist durch die Platine ein selbsttätiges Wiedereinschalten der Verteilervorrichtung nach einem Kurzschluss möglich.

Durch die IP-basierte Ansteuerung der Platine in der Verteilervorrichtung kann ein Nullleiter zusätzlich zu einer Phase ausgeschaltet werden, wenn ein Relais beispielsweise mit zwei Schließern ausgestattet ist. Hierdurch kann beispielsweise ein Netzfreischalter ersetzt werden.

Gemäß einer Ausführungsform weist die Verteilervorrichtung ein Verschlusselement zum zumindest bereichsweisen Abdecken des Grundelements auf. Hierdurch kann das Grundelement mit der Platine, den Anschlussbuchsen, den internen Leitungen und den weiteren Komponenten, wie beispielsweise Relais oder Spulen, geschützt werden. Die Zugänglichkeit zur Verteilervorrichtung kann optimiert werden, wenn das Verschlusselement mindestens eine Aussparung zum Führen beziehungsweise zum Hindurchführen einer Schaltbrücke aufweist, und/oder das Verschlusselement mindestens eine als ein Messkontakt ausgestaltete Durchführung aufweist. Durch beispielsweise farblich markierte Messkontakte auf der Oberfläche des Verschlusselementes können Messungen durch ein Fachpersonal durchgeführt werden, ohne das Grundelement zu öffnen. Die Schaltbrücken sind vorzugsweise von außen zu betätigen, so dass ohne die Verteilervorrichtung öffnen zu müssen ein Aktivieren und Deaktivieren der Schaltbrücken möglich ist.

Nach einer weiteren Ausgestaltung weist die Verteilervorrichtung eine optische Zustandsanzeige auf. Die Zustandsanzeige kann beispielsweise als ein Display oder als mindestens eine Statusleuchte ausgeführt sein. Beispielsweise kann die Verteilervorrichtung eine Service-LED enthalten, die optische Signale über einen Systemzustand übermittelt. Dies ist vor allem während der Installationsarbeiten und bei späteren Erweiterungen oder Systemüberprüfungen vorteilhaft.

Die Verteilervorrichtung kann während der Installation automatisiert überprüft und registriert werden, wenn sie eine optische oder elektronische Codierung aufweist, die manuell oder automatisiert auslesbar ist. Jede Verteilervorrichtung kann beispielsweise eine Codierung auf der Oberseite enthalten, die einem Techniker oder einem Roboter übermittelt, welche IP das Bauteil bzw. die Verteilervorrichtung aufweist. Dabei können auch weitere Informationen übermittelt werden, wie beispielsweise, welche Anschlüsse vorhanden sind und wie diese angeschlossen sind, wo oben, unten, vorne und hinten ist und um welches Bauteil es sich genau handelt. Der Techniker oder der Roboter kann so die verschiedenen Ein- und Ausgänge zuordnen und weiß, welche Buchse mit welcher Leitung verbunden werden muss. Die Codierung kann beispielsweise eine optische Codierung, wie ein QR-Code oder Strichcode, und/oder eine elektronische Codierung, wie eine NFC-Codierung, aufweisen. Über eine mechanische Codierung der Bauteile kann ein Fertigungsroboter die Bauteile und deren Ausrichtung erkennen und die Montage am Raummodul und beim Zusammenfügen der Fertigteile übernehmen. Damit kann beim Aufbau eines Hauses aus einzelnen vorgefertigten Wand-, Boden und Deckenelementen auch gleich automatisiert die elektrische Installation vorgenommen werden.

Die Sicherheit der Verteilervorrichtung kann erhöht werden, wenn das Grundelement und/oder das Verschlusselement und/oder das Systemkabel entlang ihren äußeren Flächen zumindest abschnittsweise elektrisch leitfähig ausgestaltet sind. Wenn beispielsweise die aus Kunststoff hergestellten Bestandteile der Verteilervorrichtung außen metallisch bedampft und damit elektrisch leitfähig hergestellt werden, kann das System geerdet und damit das gesamte Netz an 230V-Leitungen abgeschirmt werden. Hierdurch kann insbesondere Elektrosmog reduziert und die äußeren Einwirkungen auf die Kommunikationsverbindung abgeschirmt werden. Abhängig von der Ausgestaltung der Elektroinstallation können durch eine entsprechende leitfähige Oberfläche der Einsatz von Schutzleitern vermieden oder reduziert werden. Die nicht verwendeten Schutzleiter können somit für weitere Aufgaben, wie beispielsweise Schaltstrom, 5 Volt Gleichstrom für die Energieversorgung von elektronischen Prozessen und dergleichen, verwendet werden.

Die Betriebssicherheit kann gesteigert und die Fehleranfälligkeit der Verteilervorrichtung bei der Elektroinstallation kann reduziert werden, wenn die mindestens eine Schaltbrücke erst dann aktivierbar ist, wenn das jeweilige Systemkabel bis zu einem Anschlag in die Öffnung eingesetzt ist. Der Anschluss der Verteilervorrichtung erfolgt vorzugsweise über das Eindrücken einer Schaltbrücke durch das in die Öffnung eingesetzte Systemkabel auf die Leiterflächen der internen Leitungen in dem Grundelement. Das Systemkabel muss bis zum Anschlag in die Öffnung eingeführt sein, andernfalls ist die Schaltbrücke nicht zu bewegen. Die Schaltbrücke kann mechanisch wieder gelöst bzw. aus der Anschlussbuchse entnommen, z.B. herausgezogen, werden.

Zum Gewährleisten von einer sicheren Montage weist die Verteilervorrichtung mindestens einen Sicherheitsbügel auf, welcher die mindestens eine Schaltbrücke an einem Aktivieren und/oder Deaktivieren hindert. Beispielsweise kann der Sicherheitsbügel zwischen dem Verschlusselement und einer Ausnehmung der Schaltbrücke eingesetzt werden. Der Sicherheitsbügel dient zur Freigabe beziehungsweise zum Blockieren der Kontaktbrücke bzw. Schaltbrücke.

Gemäß einem weiteren Aspekt der Erfindung wird ein System zum Führen und Verteilen von elektrischer Energie und zum Bereitstellen einer datenleitenden Kommunikationsverbindung mit mindestens einer erfindungsgemäßen Verteilervorrichtung bereitgestellt. Das System weist neben der mindestens einen Verteilervorrichtung mindestens eine Kommunikationszentrale auf, die datenleitend mit der mindestens einen Verteilervorrichtung über mindestens einen elektrischen Leiter stromleitend verbindbar ist. Des Weiteren kann das System Verbraucher und elektrische Leitungen aufweisen, die in eine entsprechende Energieverteilung eingebunden sind.

Basierend auf der erfindungsgemäßen Verteilervorrichtung kann ein System bereitgestellt werden, welches auch zukünftigen Anforderungen im Hinblick auf Automatisierungs- und Analysemöglichkeiten gerecht wird. Hierfür kann das entsprechende System nicht nur Bauteile, Verbraucher oder Leitungen aktiv abschalten, sondern zum Beispiel ganze Abschnitte einer Elektroinstallation auch wieder einschalten. Insbesondere kann ein derartiges System im Rahmen einer Weiterentwicklung einer bestehenden Elektroinstallation in einem Gebäude, einer Fabrik, einer Anlage und dergleichen eingesetzt werden. Des Weiteren kann das System als eine Nachrüstlösung ausgeführt sein.

Durch das System kann beispielsweise nach einem Kurzschluss automatisch Stromkreis für Stromkreis wieder in Betrieb genommen werden, wodurch Fehler eingegrenzt und ein defekter Abschnitt der Energieverteilung oder ein Gerät gezielt eingegrenzt werden. Ein Systembericht kann hierbei einen Techniker oder einen Roboter zu einer entsprechenden Position bzw. Stelle in der Energieverteilung führen. Durch die Kommunikationszentrale kann beispielsweise ein Internetanschluss im gesamten Installationsbereich bereitgestellt werden. Dies kann ein drahtgebundener Internetanschluss, beispielsweise über eine ISDN-Verbindung, DSL-Verbindung, KabelVerbindung und dergleichen, oder ein drahtloser Internetanschluss, beispielsweise gemäß einem UMTS-Standard, LTE-Standard, Satelliten-Anschluss und dergleichen, sein. Zwischen der Kommunikationszentrale und den Verbindungsvorrichtungen kann ein datenleitendes Kommunikationsnetz hergestellt werden, welches einen datenleitenden Zugang ermöglicht. Die Kommunikationszentrale und die Verbindungsvorrichtungen können beispielsweise als Adapter für ein Powerline Kommunikationsnetz dienen. Es können somit zusätzliche Leitungen, wie beispielsweise LAN-Verbindungen zum Bereitstellen eines Internetzugangs entfallen.

Vorteilhafterweise ist ferner ein nicht beanspruchtes Systemkabel mit mindestens zwei elektrischen Leitungen zum Anschluss an eine vorbeschriebene Verteilervorrichtung vorgesehen, wobei die elektrischen Leitungen beabstandet und im Wesentlichen parallel zueinander verlaufen. Die elektrischen Leitungen weisen jeweils einen länglichen Querschnitt auf. Zusätzlich oder alternativ dazu, weist das Systemkabel einen eckigen Querschnitt auf.

Die elektrischen Leitungen können zum Beispiel einen Querschnitt mit einer im Wesentlichen rechteckförmigen Grundform aufweisen. Die Oberseite und/oder Unterseite jeder elektrischen Leitung könnte abgerundet sein. Die Oberseite und die Unterseite sind vorzugsweise die beiden einander gegenüberliegenden Kurzseiten bei Querschnittsbetrachtung der elektrischen Leitungen. Das Systemkabel kann einen eckigen, zum Beispiel einen viereckigen, fünfeckigen, sechseckigen, siebeneckigen oder achteckigen Querschnitt aufweisen. Zur Kodierung und eindeutigen Identifikation der Ausrichtung für den Anschluss an der Verteilervorrichtung kann das Systemkabel einen gepfeilten bzw. pfeilförmigen Querschnitt aufweisen. Des Weiteren ist bevorzugterweise vorgesehen, dass das Systemkabel eine, ganz besonders bevorzugterweise eine einzige, Ummantelung aufweist, welche sowohl um die elektrischen Leitungen herum, sowie auch in den Zwischenräumen zwischen den elektrischen Leitungen angeordnet ist. Separate Ummantelungen für jeden elektrischen Leiter innerhalb des Systemkabels sind vorzugsweise nicht vorgesehen. Somit hat das Systemkabel durch seine Form und Ausgestaltung eine definierte Lage und Anordnung der Adern bzw. elektrischen Leitungen, ermöglicht den Anschluss von Geräten, die phasenrichtig angeschlossen werden müssen und ist kaum in artfremden Installationen zu verwenden oder zu manipulieren, da die Adern nicht separat isoliert und farblich gekennzeichnet sind.

Die Kommunikationszentrale kann als eine PowerLine Zentrale ausgestaltet sein und einem Stromzähler oder einem Übergabepunkt nachgeschaltet sein.

Bevorzugterweise wird ein nicht beanspruchtes Werkzeug zum Durchführen einer Montage einer Verteilervorrichtung bereitgestellt. Hierdurch kann eine schnelle und einfache Montage des Leitungsnetzes durchgeführt werden. Mit Ausnahme der Verkabelung im Verteilerkasten sind somit Fachkenntnisse kaum erforderlich. Neben der Montage der Verteilervorrichtung können auch Kabel über ein, beispielsweise als Montagezange ausgeführtes, Werkzeug positioniert und in entsprechende Öffnungen der Verteilervorrichtung eingesetzt werden.

Ferner ist bevorzugterweise ein nicht beanspruchtes Sicherungsautomat mit einer Funktion als Sicherung, Fehlstromsicherung und/oder Schütz vorgesehen, welcher sich nach einer Abschaltung (z.B. Kurzschluss) und einer anschließenden Freigabe durch das vorbeschriebene System und/oder die vorbeschriebene Kommunikationszentrale selbsttätig wieder einschaltet. Der Sicherungsautomat kann Teil des vorgeschriebenen Systems sein.

Es können insbesondere die folgenden Vorteile ermöglicht werden:
- Das Systemkabel weist eine eindeutige Position in der jeweiligen Öffnung auf und kann somit nicht falsch bzw. "verpolt" hineingeschoben bzw. angeschlossen werden. Hierfür kann das Systemkabel entsprechend geformt sein bzw. einen entsprechenden mit den Öffnungen korrespondierenden Querschnitt aufweisen.
- Das Systemkabel kann eine optische Markierung aufweisen, die die beiden Langseiten des Systemkabels als Seite A und Seite B markiert. Die Klemme kann entsprechend farblich gekennzeichnet sein. Dies erleichtert die Montage, wenn das Systemkabel mit der Zange erfasst und ggf. um 180° in Längsrichtung gedreht werden muss, um es in die entsprechende Buchse der Klemme einführen zu können.

- Die Steckverbindung und die elektrische Kontaktierung zwischen den elektrischen Leitern des Systemkabels und den internen Leitern durch die Schaltbrücken können reversibel ausgestaltet sein, sodass ein Herstellen und Trennen der jeweiligen elektrischen Verbindungen beliebig oft durchführbar ist.
- Für die Montage des Systems und der Verteilervorrichtungen sind keine oder zumindest nur geringe Fachkenntnisse notwendig. Hierdurch können beispielsweise bei einem Fertigbauhaus im Wesentlichen beliebige Handwerker die Verlegung der elektrischen Leitungen und der Verteilervorrichtungen übernehmen. Ein speziell ausgebildeter Elektriker ist somit nicht notwendig.
- Das System kann schnell und übersichtlich montiert werden, sodass Fehler reduziert und eine eventuelle Fehlersuche vereinfacht wird.
- Die Verbindung zwischen den Systemkabeln bzw. den elektrischen Leitungen mit den Verteilervorrichtungen kann automatisiert werden. Hierdurch kann die Montage des Systems "roboterfähig" ausgestaltet sein.
- Das Verlegen von zusätzlichen Steuerleitungen oder Netzwerkleitungen kann entfallen, da durch die in die Verteilervorrichtungen integrierten Platinen ein PowerLine-Kommunikationsnetz erzeugt wird.
- Die Verteilervorrichtungen eines Systems können individuell identifiziert und gesteuert werden. Durch die Steuerung der Platinen können beispielsweise Relais eingeschaltet oder ausgeschaltet werden.
- Eine Verteilervorrichtung kann als Basis für einen Sockel, eine Steckdose, einen Schalter, eine Leuchte, einen Netzwerk-Anschlusspunkt (LAN, Telefon), Raumsensoren, eine Sicherung, ein Gerät und dergleichen eingesetzt werden.

### Kurze Beschreibung der Zeichnungen

Nachstehend werden verschiedene Ausführungsbeispiele der Erfindung anhand der Zeichnungen näher erläutert. Es zeigen
- Fig. 1: eine perspektivische Darstellung eines Grundelementes mit internen Leitungen,
- Fig. 2: eine perspektivische Darstellung eines Grundelementes mit eingesetzten Anschlussbuchsen,
- Fig. 3: eine perspektivische Darstellung eines Grundelementes mit angeordneter Platine,
- Fig. 4: eine perspektivische Darstellung eines Grundelementes mit in die Anschlussbuchsen eingesetzten Schaltbrücken,
- Fig. 5: eine perspektivische Darstellung eines Grundelementes mit aufgesetztem Verschlusselement,
- Fig. 6: eine perspektivische Darstellung einer montierten Verteilervorrichtung mit einem eingesetzten Systemkabel und
- Fig. 7: eine schematische Darstellung eines Systems.

### Bevorzugte Ausführungsformen der Erfindung

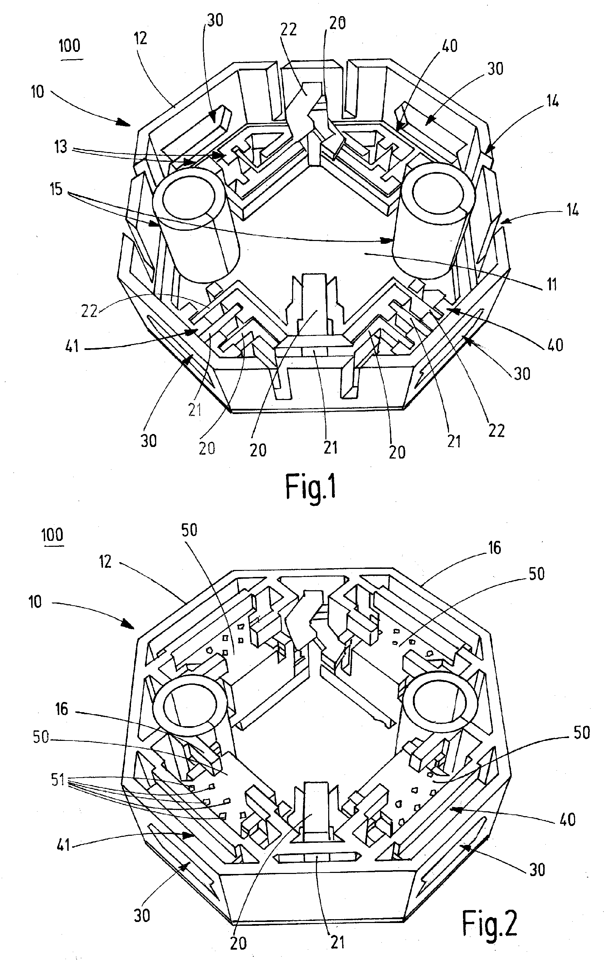

Die Fig. 1 zeigt eine perspektivische Darstellung eines Grundelementes 10 einer Verteilervorrichtung 100 mit internen Leitungen 20, 21, 22. Es ist eine erste Montageebene der Verteilervorrichtung 100 gezeigt. Das Grundelement 10 weist einen achteckigen Querschnitt auf. Von einem Boden 11 erstrecken sich Wände 12, die vier Öffnungen 30 aufweisen. Die Öffnungen 30 weisen jeweils eine eckige Form und insbesondere eine Pfeilform auf. Die Öffnungen 30 sind an Anschlussbereichen 40, 41 angeordnet.

Die internen Leitungen 20, 21, 22 sind als Stromschienen ausgeführt, die zwischen Stegen 13 am Boden 11 des Grundelementes 10 ortsfest verlegt sind. Die internen Leitungen 20, 21, 22 sind derart verlegt, dass die internen Leitungen 20, 21, 22 von mindestens zwei unterschiedlichen Anschlussbereichen 40, 41 elektrisch miteinander verbindbar sind.

Die internen Leitungen 20, 21, 22 bestehen aus einer Phasenleitung 22, einem Nullleiter 20 und einem Schutzleiter 21.

Zum Bereitstellen von Befestigungsmöglichkeiten in den Anschlussbereichen 40, 41 weisen die Wände 12 des Grundelements 10 Einschubschlitze 14 auf, die zu je zwei Seiten an jedem Anschlussbereich 40, 41 angeordnet sind. Darüber hinaus sind zwei Durchgangsbohrungen 15 in dem Grundelement 10 angeordnet. Mit Hilfe der Durchgangsbohrungen 15 kann das Grundelement 10 und damit die Verteilervorrichtung 100 beispielsweise an einer Wand, in einer UP-Dose oder an einem Geräteträger befestigt werden.

In der Fig. 2 ist eine perspektivische Darstellung eines Grundelementes 10 mit eingesetzten Anschlussbuchsen 50 veranschaulicht. Es wird die zweite Montageebene der Verteilervorrichtung 10 gezeigt. Die Anschlussbuchsen 50 sind in den Anschlussbereichen 40, 41 derart angeordnet, dass die Eischubschlitze 14 als Führungen verwendet werden. Oberhalb der Anschlussbuchsen 50 ist eine Abschlussscheibe 16 angeordnet, die die Anschlussbuchsen 50 bereichsweise bedeckt und die Einschubschlitze 14 verschließt. Die Anschlussbuchsen 50 und die Abschlussscheibe 16 können alternativ zu der dargestellten mehrteiligen Ausführung auch einteilig ausgestaltet sein.

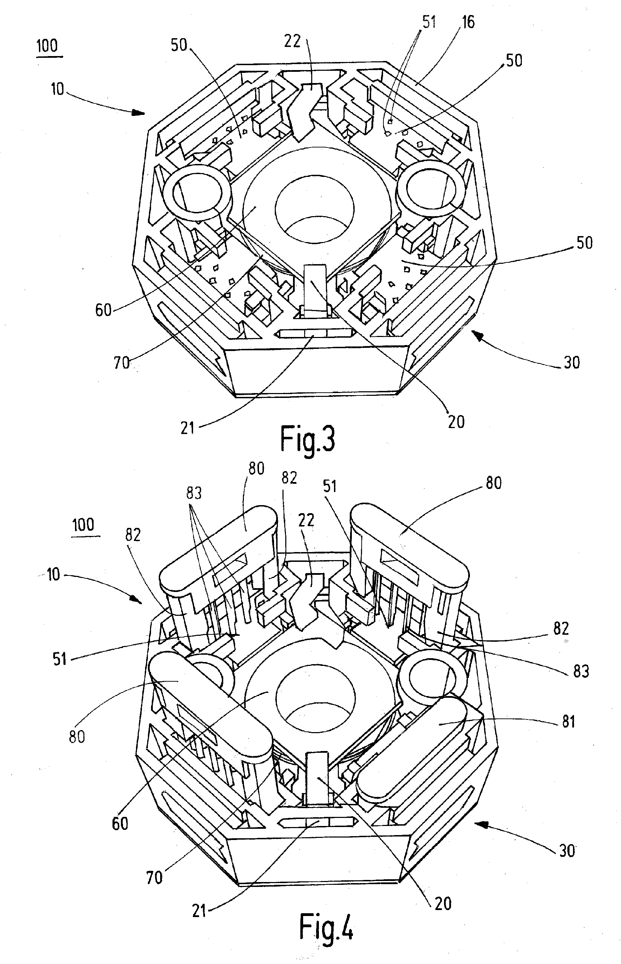

Die Fig. 3 zeigt eine perspektivische Darstellung eines Grundelementes 10 mit einer angeordneten Platine 60. Der Einbau der Platine 60 stellt hierbei eine dritte Montageebene der Verteilervorrichtung 100 dar. Zusätzlich zur Platine 60 wurde am Boden 11 des Grundelements 10 eine Spule 70 zum Erzeugen eines Magnetfelds positioniert. Die Spule 70 ist mit der Platine gekoppelt indem im Zentrum der Spule ein magnetisch bewegtes Bauteil mindestens einen Kontakt auf der Platine öffnet bzw. schließt.

Die Platine 60 ist eine Steuerplatine, die einen PowerLine-Chip aufweist. Eine Energieversorgung der Platine 60 erfolgt über die internen Leitungen 20, 22. Die Platine 60 kann somit über die Phase 22, den Nullleiter 20 und den Schutzleiter 21 eine PowerLine-Kommunikationsverbindung herstellen. Da die Platine 60 eine eigene IP-Adresse aufweist, kann die jeweilige Verteilervorrichtung 100 eindeutig identifiziert und angesteuert oder ausgelesen werden.

In der Fig. 4 ist eine vierte Montageebene der Verteilervorrichtung 100 gezeigt, bei der das Grundelement 10 mit in die Anschlussbuchsen 50 eingesetzten Schaltbrücken 80, 81 bestückt ist.

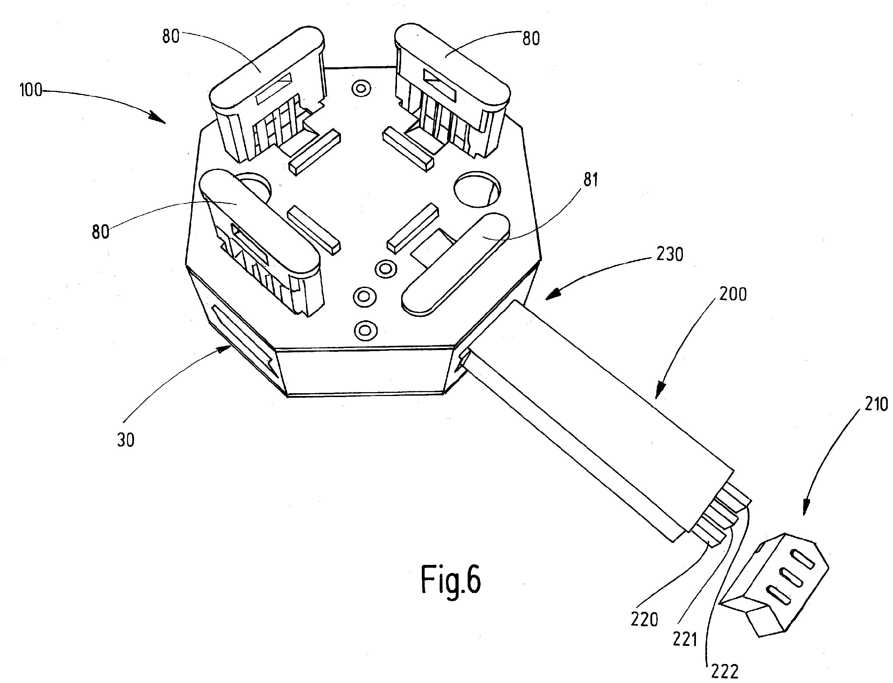

Die Schaltbrücken 80, 81 weisen jeweils zwei Führungsschienen 82 und jeweils sechs zwischen den Führungsschienen 82 angeordnete Kontaktstifte 83 auf. Die Führungsschienen 82 und die Kontaktstifte 83 können in entsprechend ausgeformte vertikale Durchführungen 51 in die Anschlussbuchsen 50 hineingeschoben werden. Wenn eine Schaltbrücke 81 in die Anschlussbuchse 50 vollständig hineingeschoben wird, ist diese Schaltbrücke 81 in einem aktivierten Zustand. Hierbei werden die Kontaktstifte 83 jeweils beidseitig der, in Fig. 6 dargestellten, elektrischen Leitungen reibschlüssig positioniert. Dabei reichen die Kontaktstifte 83 derart tief durch die Anschlussbuchse 50 hindurch, dass die am Boden 11 angeordneten internen Leitungen 20, 21, 22 ebenfalls von den Kontaktstiften 83 elektrisch kontaktiert werden. Hierdurch kann zwischen den elektrischen Leitungen und den internen Leitungen 20, 21, 22 ein elektrischer Kontakt hergestellt werden. Durch den Einsatz mehrerer Schaltbrücken 80, 81 kann zwischen mehreren Anschlussbereichen eine elektrisch leitfähige Verbindung hergestellt werden.

Die zwischen den Schaltbrücken 80, 81 eingesetzte Spule 70 kann dazu eingesetzt werden, die Schaltbrücken 81 aus einem aktivierten Zustand in einen deaktivierten Zustand zu verschieben bzw. aus den Anschlussbuchsen 50 vertikal hinauszuschieben.

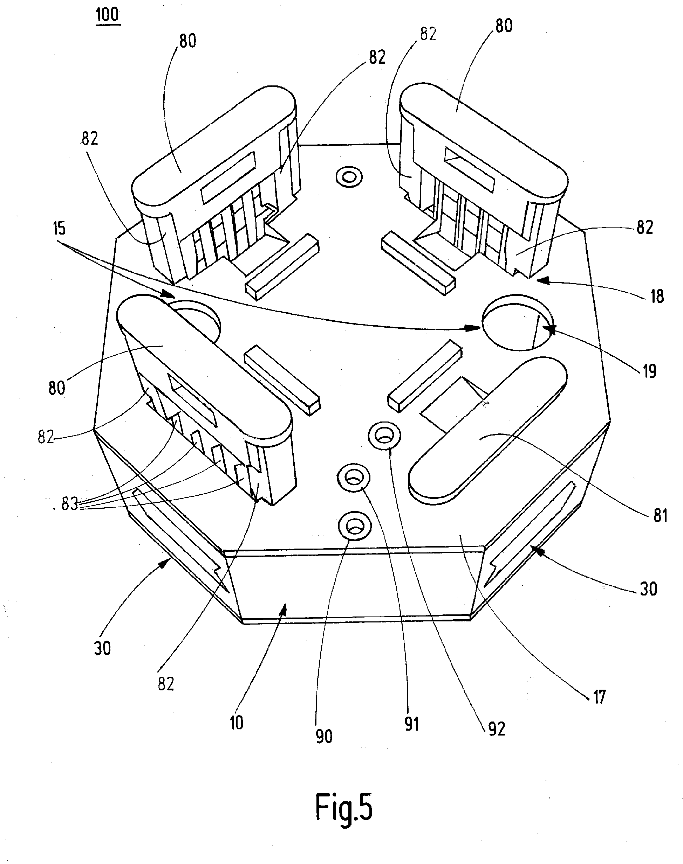

Die Fig. 5 zeigt eine perspektivische Darstellung eines Grundelementes 10 mit einem aufgesetzten Verschlusselement 17. Die Verteilervorrichtung 100 ist in einer fünften Montageebene verdeutlicht. Mit einem auf das Grundelement 10 aufgesetzten Verschlusselement 17 ist die Verteilervorrichtung 100 vollständig bestückt und fertiggestellt. Gemäß dem Ausführungsbeispiel entspricht die Verteilervorrichtung 100 einem 4-fach-Verteiler.

Das Verschlusselement 17 weist Aussparungen 18, 19 zum Hindurchführen der Schaltbrücken 80, 81 und Befestigungsbohrungen 15 auf. Des Weiteren sind Messkontakte 90, 91, 92 an dem Verschlusselement 17 angeordnet. Hierbei sind die Messkontakte 90, 91, 92 als Öffnungen ausgestaltet, welche über den entsprechenden internen Leitungen 20, 21, 22 positioniert sind. In dem in Fig. 5 gezeigten Beispiel sind drei Schaltbrücken 80 geöffnet bzw. im deaktivierten Zustand. Eine Schaltbrücke 81 befindet sich im geschlossen bzw. aktiviertem Zustand.

In der Fig. 6 ist eine perspektivische Darstellung einer montierten Verteilervorrichtung 100 mit einem eingesetzten Systemkabel 200 dargestellt. Der besseren Übersicht halber ist in Fig. 6 auch der Querschnitt des Systemkabels 200 ohne die elektrischen Leitungen 220, 221, 222 gezeigt.

Das Systemkabel 200 weist eine Form auf, die mit den Öffnungen 30 korrespondiert. Im Systemkabel 200 befinden sich in diesem Beispiel drei Adern bzw. elektrische Leitungen 220, 221, 222, welche über die Schaltbrücken 80, 81 kontaktierbar sind, wenn ein Ende des Systemkabels 200 vollständig in einer Öffnung 30 eingesetzt ist.

Ein ordnungsgemäß in die Öffnung 30 eingesetztes Systemkabel 200 bildet eine Steckverbindung 230 aus.

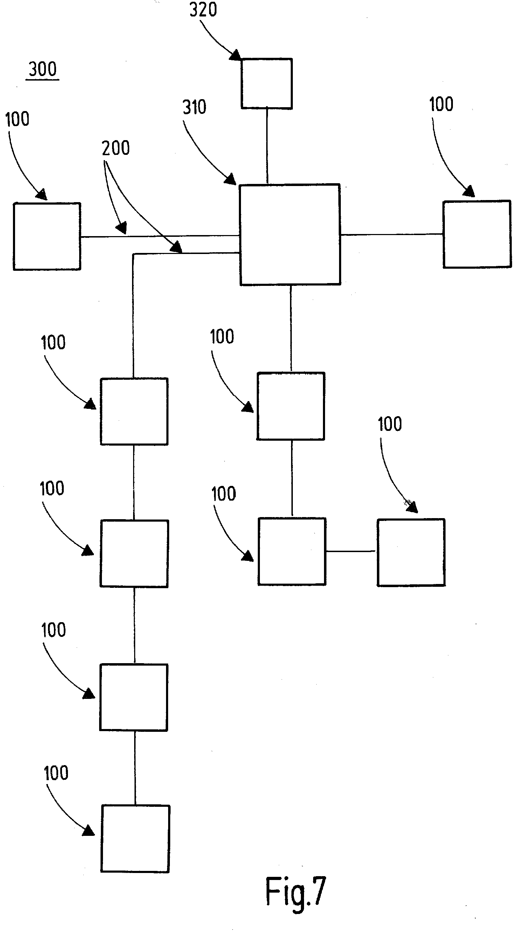

Die Fig. 7 veranschaulicht in einer schematischen Darstellung ein System 300 gemäß einer Ausführungsform der Erfindung. Das System 300 weist eine Kommunikationszentrale 310 auf, die mit einer Vielzahl an Verteilervorrichtungen 100 über Systemkabel 200 verbunden sind. Durch den Einsatz der Platinen 60 in den Verteilervorrichtungen 100 kann ein datenleitendes Kommunikationsnetz erstellt werden. Über die Systemkabel 200 kann auch ein Internetzugang bereitgestellt werden. Hierzu ist die Kommunikationszentrale 310 mit einem zentralen Internetanschluss 320 gekoppelt.

Die als Verteiler- und Verbinderklemmen ausgestaltbare Verteilervorrichtung 100 kann für eine Starkstrominstallation, wie beispielsweise bis 16A eingesetzt werden. Insbesondere kann die Verteilervorrichtung 100 die folgenden beispielhaften Merkmale aufweisen:
- Das Grundelement besteht aus einem Kunststoff mit mindestens vier Anschlussabschnitten und weist einen 8-eckig Querschnitt auf. Der Durchmesser des Grundelements kann beispielsweise ø 34 mm mit einer Gesamthöhe der Verteilervorrichtung von Höhe 13 mm betragen.
- Eine zentrale oder mehrere dezentrale Befestigungsbohrungen zum Aufstecken oder Festschrauben der Verteilervorrichtung können vorgesehen sein.
- Als UP (Unterputz)-Dosen ausgestaltete Grundelemente und Verschlusselemente und Leerrohre zum Führen von elektrischen Leitungen können metallisch bedampft bzw. geschirmt und geerdet sein.
- Die Systemkabel können mit 3 × 1,5 mm² elektrischen Leitungen bzw. Adern ausgestaltet sein.
- Die Platine kann einen PowerLine-Chip mit einer eigenen IP-Adresse aufweisen. Des Weiteren kann die Platine mit einem Wärmesensor, einer Service-LED, mindestens einem Relais oder einer Spule verbunden sein. Das Relais kann auch als ein Halbleiter, wie beispielsweise Transistor, Thyristor, Halbleiterrelais, IGBT und dergleichen ausgeführt sein und dient zum Schalten von Eingängen und/oder Ausgängen der Verteilervorrichtung.
- Die Verteilervorrichtung kann mindestens einen Anschluss für Schalter aufweisen.
- Die Verteilervorrichtung kann für Wechselschaltungen ausgeführt sein.
- Die Verteilervorrichtung ist für einen nachträglichen Einbau in bereits verlegte Systemkabelinstallationen geeignet.

Des Weiteren kann die als Verbinder ausgestaltete Verteilervorrichtung folgendermaßen ausgestaltet sein:
- Die Verteilervorrichtung kann als ein UP-Verbinder mit manueller Schaltfunktion (An/Aus-, Wechsel-, Kreuzschalter) ausgeführt sein.
- Die Verteilervorrichtung kann als ein UP-Verbinder für Dosen mit LAN-Buchse oder IoT (Internet of Things)-Geräte ausgeführt sein.
- Die Verteilervorrichtung kann als ein UP-Verbinder für Geräte, die nicht entfernt werden dürfen, ausgestaltet sein. Entsprechende Geräte können Komponenten eines Alarmsystems sein.
- Die Verteilervorrichtung kann als ein UP-Verbinder für herkömmliche Anschlüsse, Raumsensoren, Brandmelder und dergleichen verwendbar sein.
- Die Verteilervorrichtung kann als ein Verbinder für das Auflegen der Systemkabel am Verteilerkasten (Trennklemmen) einsetzbar sein.
- Die Verteilervorrichtung kann als ein Verbinder an einem Sicherungsautomaten, FI-Schutzschalter oder Schütz oder einer Kombination dieser Automaten einsetzbar sein.

### Bezugszeichenliste

- 100: Verteilervorrichtung

- 10: Grundelement
- 11: Boden des Grundelements
- 12: Wand des Grundelements
- 13: Stege am Boden des Grundelements
- 14: Einschubschlitz
- 15: Befestigungsbohrung
- 16: Abschlussscheibe
- 17: Verschlusselement
- 18: Aussparung für eine Schaltbücke
- 19: Aussparung für eine Befestigungsbohrung

- 20: interne Leitung / erste Phase
- 21: interne Leitung / Schutzleiter
- 22: interne Leitung / zweite Phase

- 30: Öffnung in einer Wand des Grundelements

- 40, 41: Anschlussbereiche im Grundelement

- 50: Anschlussbuchse
- 51: vertikale Durchführungen der Anschlussbuchse

- 60: Platine
- 70: Spule

- 80: deaktivierte Schaltbrücke
- 81: aktivierte Schaltbrücke
- 82: Führungsschiene
- 83: Kontaktstift

- 90: erster Messkontakt
- 91: zweiter Messkontakt
- 92: dritter Messkontakt

- 200: Systemkabel
- 210: Querschnitt des Systemkabels
- 220: erste elektrische Leitung
- 221: zweite elektrische Leitung
- 222: dritte elektrische Leitung
- 230: Steckverbindung
- 300: System
- 310: Kommunikationszentrale
- 320: zentraler Internetanschluss

## Patentansprüche

1. Verteilervorrichtung (100) zum elektrischen Verbinden von mindestens einer elektrischen Leitung (220, 221, 222) eines ersten Systemkabels (200) mit einer elektrischen Leitung (220, 221, 222) eines zweiten Systemkabels (201), aufweisend ein Grundelement (10) mit mindestens zwei Anschlussbereichen (40, 41) zum Aufnehmen und Führen von internen Leitungen (20, 21, 22) der Verteilervorrichtung (100) entlang eines Bodens (11) und zum Aufnehmen von Anschlussbuchsen (50) der Verteilervorrichtung (100) oberhalb der internen Leitungen (20, 21, 22), aufweisend jeweils eine Öffnung (30) in einer Wand (12) des Grundelementes (10) im Anschlussbereich (40, 41) zum Ausbilden einer Steckverbindung (230) mit jeweils einem der Systemkabel (200, 201), **dadurch gekennzeichnet, dass** in die Anschlussbuchsen (50) Schaltbrücken (80, 81) der Verteilervorrichtung (100) einsetzbar sind, wobei die Schaltbrücken (80, 81) dazu ausgestaltet sind, in einem aktivierten Zustand die internen Leitungen (20, 21, 22) elektrisch mit den elektrischen Leitungen (220, 221, 222) des in die Öffnung (30) hineingesteckten Systemkabels (200, 201) zu verbinden, sowie in einem deaktivierten Zustand die elektrische Verbindung zu trennen.

2. Verteilervorrichtung (100) nach Anspruch 1, wobei die mindestens eine Schaltbrücke (80, 81) manuell oder elektrisch aktivierbar und/oder deaktivierbar ist.

3. Verteilervorrichtung (100) nach Anspruch 1 oder 2, wobei mindestens eine durch eine Öffnung (30) und dem Systemkabel (200, 201) ausgebildete Steckverbindung (230) polarisiert ausgeführt ist.

4. Verteilervorrichtung (100) nach einem der Ansprüche 1 bis 3, wobei das Grundelement (10) mindestens eine mit den internen Leitungen (20, 21, 22) verbindbare Platine (60) aufweist, wobei die mindestens eine Platine (60) eine IP-Adresse aufweist und dazu ausgestaltet ist, eine Powerline-Kommunikationsverbindung bereitzustellen.

5. Verteilervorrichtung (100) nach Anspruch 4, wobei die mindestens eine Platine (60) über die Powerline-Kommunikationsverbindung fernsteuerbar ist.

6. Verteilervorrichtung (100) nach Anspruch 4 oder 5, wobei die Verteilervorrichtung (100) mindestens einen von der Platine (60) auslesbaren Sensor aufweist, wobei mindestens ein Sensor ein Temperatursensor, ein Spannungssensor oder ein Stromsensor ist.

7. Verteilervorrichtung (100) nach einem der Ansprüche 4 bis 6, wobei die mindestens eine Schaltbrücke (80, 81) und/oder mindestens ein in dem Grundelement (10) angeordnetes Relais von der mindestens einen Platine (60) gesteuert aktivierbar und/oder deaktivierbar sind.

8. Verteilervorrichtung (100) nach einem der Ansprüche 1 bis 7, wobei die Verteilervorrichtung (100) ein Verschlusselement (17) zum zumindest bereichsweisen Abdecken des Grundelements (10) aufweist, wobei das Verschlusselement (17) mindestens eine Aussparung (18) zum Führen einer Schaltbrücke (80, 81) aufweist, wobei das Verschlusselement (17) mindestens eine als ein Messkontakt (90, 91, 92) ausgestaltete Durchführung aufweist.

9. Verteilervorrichtung (100) nach einem der Ansprüche 1 bis 8, wobei die Verteilervorrichtung (100) eine optische Zustandsanzeige aufweist.

10. Verteilervorrichtung (100) nach einem der Ansprüche 1 bis 9, wobei die Verteilervorrichtung (100) eine optische oder elektronische Codierung aufweist, die manuell oder automatisiert auslesbar ist.

11. Verteilervorrichtung (100) nach einem der Ansprüche 1 bis 10, wobei das Grundelement (10) und/oder das Verschlusselement (17) und/oder das Systemkabel (200, 201) entlang ihren äußeren Flächen zumindest abschnittsweise elektrisch leitfähig ausgestaltet sind.

12. Verteilervorrichtung (100) nach einem der Ansprüche 1 bis 11, wobei die mindestens eine Schaltbrücke (80, 81) erst dann aktivierbar ist, wenn das Systemkabel (200, 201) bis zu einem Anschlag in die Öffnung (30) eingesetzt ist.

13. Verteilervorrichtung (100) nach einem der Ansprüche 1 bis 12, wobei mindestens ein Sicherheitsbügel vorgesehen ist, welches die mindestens eine Schaltbrücke (80, 81) an einem Aktivieren und/oder Deaktivieren hindert.

14. System (300) zum Führen und Verteilen von elektrischer Energie und zum Bereitstellen einer datenleitenden Kommunikationsverbindung mit mindestens einer Verteilervorrichtung (100) gemäß einem der vorhergehenden Ansprüche, aufweisend mindestens eine Kommunikationszentrale (310), die datenleitend mit der mindestens einen Verteilervorrichtung (100) über mindestens einen elektrischen Leiter (220, 221, 222) stromleitend verbindbar ist.

## Claims

1. Distribution device (100) for electrically connecting at least one electrical line (220, 221, 222) of a first system cable (200) to an electrical line (220, 221, 222) of a second system cable (201), having a base element (10) with at least two connection areas (40, 41) for accommodating and guiding internal lines (20, 21, 22) of the distribution device (100) along a floor (11) and for accommodating connection sockets (50) of the distribution device (100) above the internal lines (20, 21, 22), each having an opening (30) in a wall (12) of the base element (10) in the connection area (40, 41) for forming a plug connection (230) with one of the system cables (200, 201) respectively, **characterized in that** circuit bridges (80, 81) of the distribution device (100) can be inserted into the connection sockets (50), wherein the circuit bridges (80, 81) are configured, in an activated state, to electrically connect the internal lines (20, 21, 22) to the electrical lines (220, 221, 222) of the system cable (200, 201) inserted into the opening (30), as well as, in a deactivated state, to separate the electrical connection.

2. Distribution device (100) according to claim 1, wherein the at least one circuit bridge (80, 81) can be activated and/or deactivated manually or electrically.

3. Distribution device (100) according to claim 1 or 2, wherein at least one plug connection (230) formed through an opening (30) and the system cable (200, 201) is configured as polarized.

4. Distribution device (100) according to one of claims 1 to 3, wherein the base element (10) has at least one circuit board (60) which can be connected to the internal lines (20, 21, 22), wherein the at least one circuit board (60) has an IP address and is configured to provide a power line communication connection.

5. Distribution device (100) according to claim 4, wherein the at least one circuit board (60) is remotely controllable via the power line communication connection.

6. Distribution device (100) according to claim 4 or 5, wherein the distribution device (100) has at least one sensor that can be read out by the circuit board (60), wherein at least one sensor is a temperature sensor, a voltage sensor or a current sensor.

7. Distribution device (100) according to one of claims 4 to 6, wherein the at least one circuit bridge (80, 81) and/or at least one relay arranged in the base element (10) can be activated and/or deactivated in a controlled manner by the at least one circuit board (60).

8. Distribution device (100) according to one of claims 1 to 7, wherein the distribution device (100) has a closure element (17) for at least partially covering the base element (10), wherein the closure element (17) has at least one recess (18) for guiding a circuit bridge (80, 81), wherein the closure element (17) has at least one passage configured as a measuring contact (90, 91,92).

9. Distribution device (100) according to one of claims 1 to 8, wherein the distribution device (100) has an optical status display.

10. Distribution device (100) according to one of claims 1 to 9, wherein the distribution device (100) has an optical or electronic coding which can be read out manually or automatically.

11. Distribution device (100) according to one of claims 1 to 10, wherein the base element (10) and/or the closure element (17) and/or the system cable (200, 201) are configured to be electrically conductive at least in sections along their outer surfaces.

12. Distribution device (100) according to one of claims 1 to 11, wherein the at least one circuit bridge (80, 81) can only be activated when the system cable (200, 201) is inserted into the opening (30) up to a stop.

13. Distribution device (100) according to one of claims 1 to 12, wherein at least one safety bar is provided, which prevents the at least one circuit bridge (80, 81) from being activated and/or deactivated.

14. System (300) for guiding and distributing electrical energy and for providing a data-conducting communication connection with at least one distribution device (100) according to one of the preceding claims, having at least one communication center (310) which can be data-conductingly electrically connected with the at least one distribution device (100) via at least one electrical conductor (220, 221, 222).

## Revendications

1. Dispositif de distribution (100) pour connecter électriquement au moins une ligne électrique (220, 221, 222) d'un premier câble de système (200) à une ligne électrique (220, 221, 222) d'un deuxième câble de système (201), présentant un élément de base (10) avec au moins deux zones de connexion (40, 41) pour recevoir et guider des lignes internes (20, 21, 22) du dispositif de distribution (100) le long d'un plancher (11) et pour recevoir des prises de connexion (50) du dispositif de distribution (100) au-dessus des lignes internes (20, 21, 22), présentant respectivement une ouverture (30) dans une paroi (12) de l'élément de base (10) dans la zone de connexion (40, 41) pour former une connexion enfichable (230) avec respectivement un des câbles de système (200, 201), **caractérisé en ce que** dans les prises de connexion (50) des ponts de commutation (80, 81) du dispositif de distribution (100) peuvent être utilisés, dans lequel les ponts de commutation (80, 81) sont conçus afin de, dans un état activé, connecter électriquement les lignes internes (20, 21, 22) aux lignes électriques (220, 221, 222) du câble de système (200, 201) inséré dans l'ouverture (30), et pour séparer la connexion électrique dans un état désactivé.

2. Dispositif de distribution (100) selon la revendication 1, dans lequel l'au moins un pont de commutation (80, 81) peut être activé et/ou désactivé manuellement ou électriquement.

3. Dispositif de distribution (100) selon la revendication 1 ou 2, dans lequel au moins une connexion enfichable (230) formée par une ouverture (30) et le câble du système (200, 201) est polarisée.

4. Dispositif de distribution (100) selon une des revendications 1 à 3, dans lequel l'élément de base (10) comporte au moins une carte électronique (60) connectable aux lignes internes (20, 21, 22), dans lequel l'au moins une carte électronique (60) présente une adresse IP et est configurée pour fournir une liaison de communication par courant porteur.

5. Dispositif de distribution (100) selon la revendication 4, dans lequel l'au moins une carte électronique (60) est contrôlable à distance via la liaison de communication par courant porteur.

6. Dispositif de distribution (100) selon la revendication 4 ou 5, dans lequel le dispositif de distribution (100) présente au moins un des capteurs lisibles par la carte électronique (60), dans lequel au moins un capteur est un capteur de température, un capteur de tension ou un capteur de courant.

7. Dispositif de distribution (100) selon une des revendications 4 à 6, dans lequel l'au moins un pont de commutation (80, 81) et/ou au moins un relais disposé dans l'élément de base (10) peut être activé et/ou désactivé de manière commandée par l'au moins une carte électronique (60).

8. Dispositif de distribution (100) selon une des revendications 1 à 7, dans lequel le dispositif de distribution (100) comporte un élément de fermeture (17) pour recouvrir au moins partiellement l'élément de base (10), dans lequel l'élément de fermeture (17) présente au moins un évidement (18) pour le guidage d'un pont de commutation (80, 81), dans lequel l'élément de fermeture (17) présente au moins un passage réalisé sous la forme d'un contact de mesure (90, 91, 92).

9. Dispositif de distribution (100) selon une quelconque des revendications 1 à 8, dans lequel le dispositif de distribution (100) comporte un indicateur d'état optique.

10. Dispositif de distribution (100) selon une quelconque des revendications 1 à 9, dans lequel le dispositif de distribution (100) comporte un codage optique ou électronique pouvant être lu manuellement ou automatiquement.

11. Dispositif de distribution (100) selon une quelconque des revendications 1 à 10, dans lequel l'élément de base (10) et/ou l'élément de fermeture (17) et/ou le câble de système (200, 201) sont conçus pour être électriquement conducteurs au moins dans des sections le long de leurs surfaces extérieures.

12. Dispositif de distribution (100) selon une des revendications 1 à 11, dans lequel l'au moins un pont de commutation (80, 81) ne peut être activé que lorsque le câble de système (200, 201) est inséré jusqu'en butée dans l'ouverture (30).

13. Dispositif de distribution (100) selon une quelconque des revendications 1 à 12, dans lequel au moins un étrier de sécurité est prévu qui empêche l'activation et/ou la désactivation du au moins un pont de commutation (80, 81).

14. Système (300) de guidage et de distribution d'énergie électrique et de fourniture d'une liaison de communication porteuse de données comportant au moins un dispositif de distribution (100) selon une des revendications précédentes, présentant au moins un centre de communication (310), qui peut être connecté électriquement avec transmission de données avec l'au moins un dispositif distributeur (100) via au moins un conducteur électrique (220, 221, 222).
